# EUROPEAN PATENT APPLICATION

(11) **EP 3 288 177 A1**
(43) Date of publication of application: **28.02.2018**
(21) Application number: 16185081.3
(22) Date of filing: 22.08.2016
(51) Int. Cl.: H02P 8/36, G08B 13/196, H02P 8/20, G05B 19/40, G05B 23/02

(54) **FAULT DETECTION FOR A PAN-TILT CAMERA**

(71) Applicant: Axis AB, 223 69 Lund (SE)
(72) Inventor: Lindfors, Göran, 26362 Viken (SE)
(74) Representative: Awapatent AB

(57) **Abstract**

There is provided a method and an apparatus for automatically performing fault detection of a motor drive system for pan or tilt movement of a monitoring camera, by comparing a characteristic of a measured, actual camera movement pattern to a corresponding characteristic of a pre-stored, expected camera movement pattern.

## Description

### Technical field

The present invention relates to the field of movable cameras. In particular, it relates to fault detection of a motor drive system for a pan-tilt camera.

### Background

Monitoring cameras are commonly used to monitor buildings, roads, shops and various other places. In particular, cameras having a movable field of view, such as PTZ (pan-tilt-zoom) cameras, or PT (pan-tilt) cameras are useful when large areas are monitored. The field of view of such a camera can be changed e.g. in response to an operator interacting with the camera via a user interface, as part of a pre-set guard tour or in response to an external sensor trigger.

A motor is needed to drive the panning or tilting motion of PTZ cameras. Especially for non-supervised movement of the camera it is important that the motor and transmission operates correctly so that the field of view of the camera is moved to cover the expected position in the monitored scene.

If a DC motor is used, position sensors, such as Hall sensors need to be provided in order to control the position of the motor. If a step motor is used, it is less common to use such position sensors, since the step motor has an inherent position sensing by counting the number of steps taken. Knowing the movement per step, the travelled angular distance can easily be calculated. However, in case the step motor fails to perform a movement due to step loss or the motor stalling, the positioning by counting steps is lost.

A step motor is usually provided with a zero or home position sensor, and the step motor positioning can be checked when the home position sensor is encountered during a movement. In addition, it is possible to control the motor to return to the home position for the specific purpose of performing a recalibration, either at certain time intervals or when it is discovered or suspected that the positioning is incorrect. The disadvantage of using the home position sensor for fault detection of a step motor is obviously that the motor has to pass this position in order to check that the positioning is correct, and there is no indication of what caused the motor to lose positioning. Adding more position sensors, in the same manner as for a DC motor is an option, but would add to the cost and complexity of the motor.

Other solutions for checking that a step motor performs the expected movements include measuring the motor current or the back electromotive force (back-EMF). This solution does not work well at all motor speeds, since the back-EMF is proportional to the speed and can be difficult to measure at low speeds. Hence, there is still room for improvement within this area.

### Summary of the invention

In view of the above, it is thus an object of the present invention to provide a cost-efficient, simple and reliable solution for fault detection of a motor drive system in a pan-tilt camera.

According to a first aspect of the invention, the above object is achieved by a method of performing automatic fault detection of a motor arranged for pan or tilt movement of a monitoring camera, comprising
a) controlling the motor to drive the camera according to a motor drive pattern,
b) measuring, by a sensor unit mounted on the camera, an angular movement pattern of the camera,
c) accessing data pertaining to a pre-stored, expected angular movement pattern of the camera corresponding to the motor drive pattern,
d) comparing a characteristic of the measured angular movement pattern to a corresponding characteristic of the pre-stored, expected angular movement pattern,
e) issuing a fault detection event if a difference between the compared characteristics is larger than a pre-determined threshold.

The method provides an efficient and easy to use way of finding faults in a drive system of a monitoring camera.

The angular movement pattern of the camera may comprise at least one of an angular velocity pattern or an angular acceleration pattern. Both of these can easily be measured without any specially adapted equipment.

The motor drive pattern may be a pre-determined self-test drive pattern. This is advantageous since it provides for a very simple comparison to the pre-stored movement pattern.

The method may further comprise the step of receiving an input to perform a self-test, and in response thereto controlling the motor to drive the camera according to the predetermined self-test motor drive pattern. The input may e.g. be from an operator who suspects that the camera is not moving in the intended manner, and the self-test can then be used to find out in a convenient manner if there is anything wrong, and if so, what type of fault exists, in the drive system of the camera.

The method may further comprise the step of controlling the motor to drive the camera according to the predetermined self-test motor drive pattern at pre-determined time intervals. In this way there will be a regular check of the drive system which makes sure that faults in the drive system will not go unnoticed for a long time.

The sensor unit may comprise at least one of an accelerometer or a gyro sensor, in particular a MEMS gyro sensor. Such sensors can accurately measure the movement pattern of the camera at both high and low speeds.

The sensor unit may be arranged for use in an image stabilization function of the camera. In other words, the image stabilization sensor unit is used for dual purposes, and, thus, the fault detection may take place without having to add any extra sensor hardware to the monitoring camera.

The characteristic may comprise at least one of: a maximum angular acceleration, a time period or an amplitude of a super-positioned oscillation of an angular velocity pattern. All of these are easily deduced from the movement patterns.

The fault detection event may indicate inadequate belt tension of a belt transferring motion from the motor to the camera. This is a common problem in a drive system including a drive belt, and can cause the camera to perform uneven movement leading to a degraded user experience.

The motor may be a step motor.

For a step motor, the fault detection event may indicate that a step loss has occurred. This is a problem that is quite common for step motors, and leads to the camera being rotated to an incorrect position. Since the step motor normally does not contain any position sensors (except for a home position sensor which only is useful when the home position is encountered), a step loss may potentially go unnoticed for a long time, causing the camera to repeatedly end up in the wrong position after a movement. The fault detection method is especially useful if the camera movement takes place as part of a guard tour or in response to external sensor input instructing the camera to move to a certain position to capture video related to the external sensor. If the camera then moves to the wrong position due to step loss, it may miss important events in the monitored scene.

According to a second aspect of the invention, there is provided a monitoring camera arrangement comprising a motor and a monitoring camera, wherein the motor is arranged to drive the camera in a pan or tilt movement, wherein the arrangement comprises
a) a motor control unit arranged to control the motor to drive the camera according to a motor drive pattern,
b) a sensor unit mounted on the camera arranged to measure an angular movement pattern of the camera,
c) a fault detection unit arranged to access data pertaining to a prestored, expected angular movement pattern corresponding to the motor drive pattern, and compare at least one characteristic of the measured angular movement pattern and the pre-stored, expected angular movement pattern, and issue a fault detection event if a difference between the compared characteristics is larger than a pre-determined threshold.

As mentioned above, the sensor unit may comprise at least one of an accelerometer or a gyro sensor, in particular a MEMS gyro sensor.

The monitoring camera arrangement may further comprise an image stabilization unit, and the sensor unit may be part of this image stabilization unit.

According to a third aspect of the invention, a computer-readable medium is provided having computer code instructions stored thereon for carrying out the above disclosed method when executed by a device having processing capability.

The second and third aspects may generally have the same features and advantages as the first aspect.

It is further noted that the invention relates to all possible combinations of features unless explicitly stated otherwise.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 shows a monitoring camera arrangement according to the invention.
Fig. 2 illustrates a method according to the invention.
Fig. 3 shows measurement data.
Fig. 4 shows another example of measurement data.

### Detailed description of embodiments

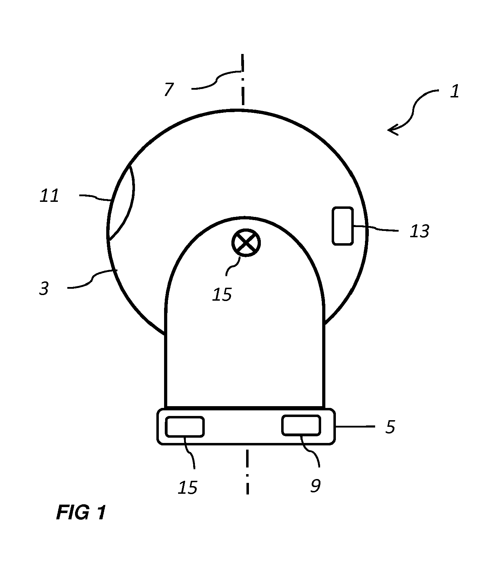

Fig. 1 schematically illustrates a monitoring camera arrangement 1, which includes a camera 3 and a pan motor 5 for driving the camera 3 to rotate (perform a pan movement) around a pan axis 7. A schematically illustrated motor control unit 9 controls the movement of the pan motor 5. It may be noted that while this application primarily will discuss movement of the camera in a pan direction, the inventive idea is equally applicable to tilt motor drive, i.e. when the camera is driven by a tilt motor to rotate around a tilt axis 15, instead of around the axis 7.

The camera has a lens 11, and is also equipped with a sensor unit 13. The exact placement of the sensor unit 13 on the camera 3 may vary, as long as it is placed in a position where it may sense the movement of the camera 3. The sensor unit 13 comprises one or more movement sensors, in the form of a gyro, most commonly a MEMS gyro, or one or more accelerometers, for detecting a movement pattern of the camera. The movement pattern of the camera may e.g. be expressed by an angular velocity curve or an angular acceleration curve.

The sensor unit 13 is advantageously provided as part of an image stabilization unit for the camera 3, where data from the sensor unit is used to improve the images captured by the camera lens 11 by electronic image stabilization, EIS. EIS is commonly used in a situation where the camera arrangement is mounted on a platform where vibrations may occur. Examples of such situations are when the camera is mounted outdoors on a pole or when the camera is mounted in a vehicle, e.g. in a bus or a train.

The drive transmission from the motor 5 to the camera 3 may be accomplished via a belt, e.g. a toothed belt. The motor 5 is commonly provided in the form of a step motor. A DC motor may also be used, but since such motors usually are combined with a set of position sensors, the herein described solution is less likely to be used with a DC motor than with a step motor.

The motor drive system may either be provided in the same unit as the camera, such as in a so called PT- or PTZ camera, or it may be provided in a separate unit, on which the camera is mounted. Such a separate motor drive unit for a camera is often denoted a PT head.

During operation, the sensor unit 13 will detect any movement of the camera 3. The detected movement can be logged by a fault detection unit 15 as a movement pattern, such as an angular velocity pattern or an angular acceleration pattern. By pattern is here e.g. meant an ordered collection of measurement values for a number of points in time. The movement pattern is then used by the fault detection unit 15 to find faults in the motor drive system, such as step losses or an inadequately tensioned belt.

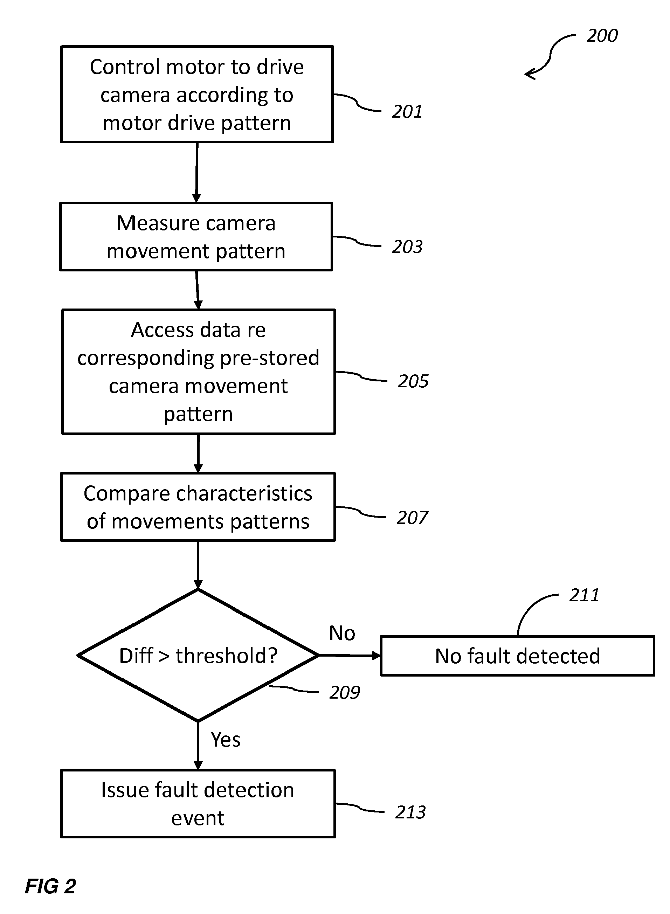

Fig 2 illustrates a method 200 of performing the fault detection. In step 201 the motor control unit 9 controls the motor 5 to drive the camera 3 according to a motor drive pattern. The motor control unit 9 may move the camera in response to a user interacting with an interface for controlling the camera, such as by moving a joystick or clicking in a graphical user interface. The motor control unit may also move the camera according to preset camera movement schedule, such as when a guard tour is implemented for the camera to move between a number of preset positions, or the camera can be moved to a predefined position in response to an event, such as an external sensor detecting movement. The camera may also be moved in accordance with a specific pre-determined self-test drive pattern, which may be specifically designed for detecting any faults in the drive system. This test drive pattern may be set to start at a predefined time, possibly be repeated regularly according to a predefined time schedule or at random time intervals, or it may be triggered by a user or software or hardware controlling the camera, e.g. when a fault is suspected. In any case, a desired or expected movement of the camera will be known or possible to deduce when the motor drive pattern is known.

In step 203, the sensor unit 13 will detect the actual angular movement that the camera 3 performs in response to being driven according to the motor drive pattern. The fault detection unit 15 will log the movement pattern that the camera 3 performs in response to the motor drive pattern, and in step 205 data relating to an expected, pre-stored movement pattern corresponding to the motor drive pattern is accessed, e.g. by being retrieved from a memory. The data may include the expected movement pattern in the form of a velocity or acceleration curve. As an alternative, or additionally, the data may contain one or more characteristics of the expected movement pattern. An important insight here is that the actual camera movement pattern may be more or less similar to the expected camera movement pattern. Any differences may be analyzed and specific features of the differences may indicate certain problems or faults associated with the motor or a belt transferring the motor movement to the camera. This will be discussed more in detail below. The measured, actual camera movement pattern may e.g include one or both of an angular velocity pattern or an angular acceleration pattern.

In step 207, certain characteristics of the movement patterns, i.e. the measured movement pattern and the corresponding pre-stored movement pattern, are compared. Such characteristics may include maximum angular acceleration of the respective movement pattern or a time period or amplitude of a super-positioned oscillation of the respective movement patterns. In a simplistic variant the characteristics may also be the movement patterns themselves, e.g. in the form of a velocity curve or an acceleration curve. However, in most cases it will be more convenient to compare some type of calculated characteristics for the movement patterns. It may be noted that automatic graph or pattern analysis software may be used for the comparison or to find suitable characteristics to compare. Which movement pattern characteristics that are used for the comparison can be determined based on the present use case, and may be based on a suspected or commonly arising fault condition. Two or more characteristics may be combined to form a characteristic that is used in the comparison.

If the characteristics of the measured movement pattern matches the characteristics of the pre-stored movement pattern, i.e. if the difference between them is less than a threshold value (different thresholds can be used if several characteristics are compared), step 209, a determination is made that no fault is detected, step 211.

If the characteristics fail to match, i.e. when the difference(s) is above the threshold value(s), a fault detection event is issued in step 213. The fault detection event may be sent to an operator or may be stored in an event log for later retrieval by the operator. The fault detection event may indicate the type of fault that is likely to have occurred based on the type of characteristic that did not match. Some examples of fault conditions and characteristics indicating such fault conditions:
- Inadequate belt tension in the belt transferring power from the motor to the camera may be indicated by the occurrence of a super-positioned oscillation on the movement pattern, or a different time period or amplitude of such an oscillation.
- Step loss may be indicated by a higher maximum acceleration value in the actual movement pattern than in the corresponding expected movement pattern.

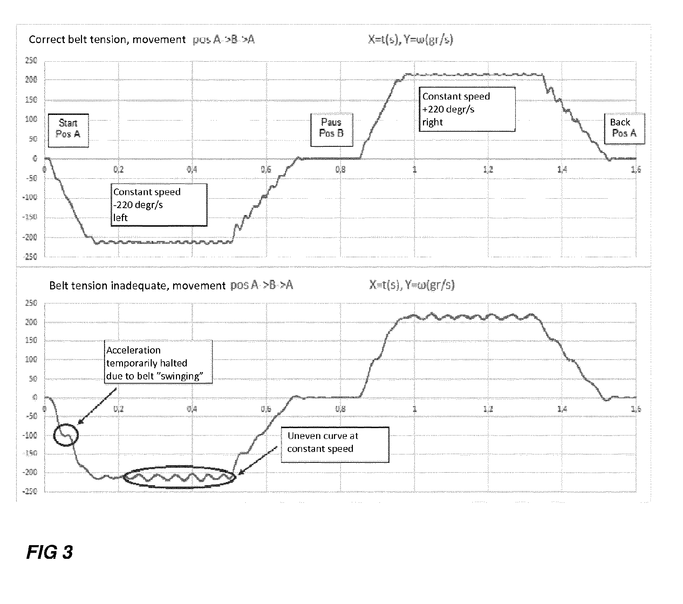

Fig 3 illustrates an example of an expected movement pattern (upper graph) and an actual movement pattern (lower graph) in case of an inadequately tensioned belt. The motor drive pattern illustrated drives the camera to perform a constant acceleration (from position A) to a speed of - 220 degrees/second, hold that speed for approx. 0,4 seconds, then decelerate to a standstill (position B) for approx. 0,2 seconds. After that the camera is driven to perform a constant acceleration to a constant speed of +220 degrees/second and that speed is maintained for approx. 0,4 seconds, and finally the camera is driven to decelerate to a standstill (back at position A). This expected movement pattern is illustrated in the upper part of Fig 3. In the lower part of Fig 3, the motor drives the camera in the same manner, but the actual movement performed by the camera will in this case be different due to an inadequately tensioned drive belt. Differences that can be seen are e.g. a higher amplitude of the super-positioned oscillation of the velocity curve. This is especially easy to spot at the periods of constant velocity.

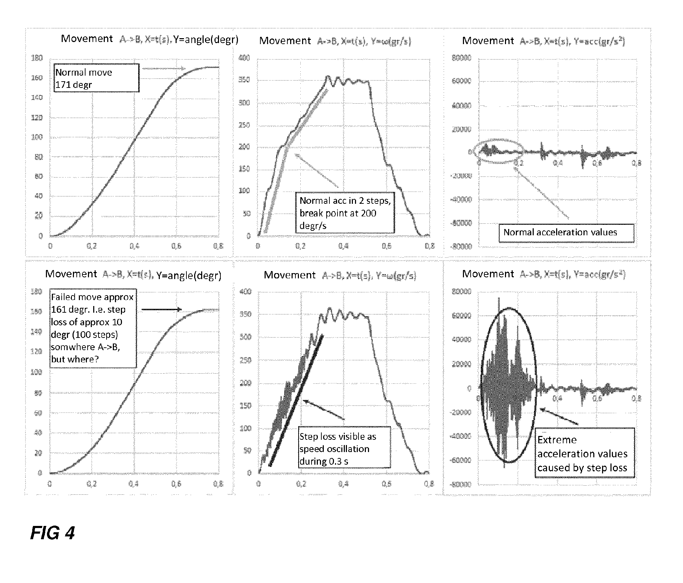

Fig 4 illustrates an example of expected movement patterns (upper graphs) and actual movement patterns (lower graphs) in case of step loss. In this case the camera is driven by the motor to perform a movement from position A to position B. The camera starts at position A, at 0 degrees, and is driven to accelerate in two phases, with a break point at 200 degrees/second, then rotate at a constant speed of 350 degrees/second, and finally decelerate to a standstill at position B, which is 171 degrees from position A. This scenario is illustrated in the upper three graphs, where the leftmost illustrates the rotation in degrees, the middle graph illustrates the velocity and the rightmost the acceleration.

In the lower three graphs of Fig. 4, the motor drives the camera in the same manner, but the resulting graphs are different due to step loss of 10 degrees. The step loss is visible as speed oscillations during the acceleration phases, which gives rise to very high acceleration values, clearly visible in the rightmost graph.

Thus, to summarize, characteristics, such as maximum acceleration or amplitude of an oscillation, of the measured movement patterns in Fig. 3 and Fig. 4 can automatically be compared to corresponding characteristics of the expected movement patterns and conclusions can be drawn regarding possible fault conditions. In case such a fault condition is detected, a fault detection event can be issued, in order for an operator to take appropriate action, such as repairing or replacing the camera arrangement or parts thereof.

It will be appreciated that a person skilled in the art can modify the above described embodiments in many ways and still use the advantages of the invention as shown in the embodiments above. Thus, the invention should not be limited to the shown embodiments but should only be defined by the appended claims. Additionally, as the skilled person understands, the shown embodiments may be combined.

## Claims

1. A method of performing automatic fault detection of a motor drive system arranged for pan or tilt movement of a monitoring camera, comprising
a) controlling the motor to drive the camera according to a motor drive pattern,
b) measuring, by a sensor unit mounted on the camera, an angular movement pattern of the camera,
c) accessing data pertaining to a pre-stored, expected angular movement pattern of the camera corresponding to the motor drive pattern,
d) comparing a characteristic of the measured angular movement pattern to a corresponding characteristic of the pre-stored, expected angular movement pattern,
e) issuing a fault detection event if a difference between the compared characteristics is larger than a pre-determined threshold.

2. The method of claim 1, wherein the angular movement pattern of the camera comprises at least one of an angular velocity pattern or an angular acceleration pattern.

3. The method of claim 1 or 2, wherein the motor drive pattern is a pre-determined self-test drive pattern.

4. The method of claim 3, further comprising receiving an input to perform a self-test, and in response thereto controlling the motor to drive the camera according to the predetermined self-test motor drive pattern.

5. The method of claim 3, further comprising controlling the motor to drive the camera according to the predetermined self-test motor drive pattern at pre-determined time intervals.

6. The method of any of the preceding claims, wherein the sensor unit comprises at least one of an accelerometer or a gyro sensor, in particular a MEMS gyro sensor.

7. The method of any of the preceding claims, wherein the sensor unit is arranged for use in an image stabilization function of the camera.

8. The method of any of the preceding claims, wherein the characteristic comprises at least one of: a maximum angular acceleration, a time period or an amplitude of a super-positioned oscillation of an angular velocity pattern.

9. The method of any of the preceding claims, wherein the fault detection event indicates inadequate belt tension of a belt transferring motion from the motor to the camera.

10. The method of any of the preceding claims, wherein the motor is a step motor.

11. The method of claim 10, wherein the fault detection event indicates that a step loss has occurred.

12. A monitoring camera arrangement comprising a motor and a monitoring camera, wherein the motor is arranged to drive the camera in a pan or tilt movement, wherein the arrangement comprises
a) a motor control unit arranged to control the motor to drive the camera according to a motor drive pattern,
b) a sensor unit mounted on the camera arranged to measure an angular movement pattern of the camera,
**characterized in that** the arrangement further comprises c) a fault detection unit arranged to access data pertaining to a prestored, expected angular movement pattern corresponding to the motor drive pattern, and compare at least one characteristic of the measured angular movement pattern and the pre-stored, expected angular movement pattern, and issue a fault detection event if a difference between the compared characteristics is larger than a pre-determined threshold.

13. The arrangement of claim 12, wherein the sensor unit comprises at least one of an accelerometer or a gyro sensor, in particular a MEMS gyro sensor.

14. The arrangement of any of claims 12-13, further comprising an image stabilization unit, wherein the sensor unit is part of the image stabilization unit.

15. A computer program product comprising a computer-readable medium having computer code instructions stored thereon for carrying out the method of any one of claims 1-11 when executed by a device having processing capability.
